# FASCICULE DE BREVET EUROPEEN

(11) **EP 1 575 003 B1**
(45) Date de publication et mention de la délivrance du brevet: **01.10.2008**
(21) Numéro de dépôt: 05101841.4
(22) Date de dépôt: 09.03.2005
(51) Int. Cl.: G07F 7/02

(54) **Mise à jour d'un compteur de valeur d'une carte à puce**
Aktualisierung eines Wertezählers einer Chipkarte
Updating a value counter of an IC card

(30) Priorité: 10.03.2004 FR 0450485
(43) Date de publication de la demande: 14.09.2005
(73) Titulaire: PROTON WORLD INTERNATIONAL N.V., 1930 ZAVENTEM (BE)
(72) Inventeur: VIDAL, Jérôme, 1030, BRUXELLES (BE)
(74) Mandataire: de Beaumont, Michel

(56) Documents cités:
- EP-A- 1 085 475
- WO-A-00/03362
- US-A- 4 800 520
- US-A- 5 806 045
- US-B1- 6 505 773

## Description

La présente invention concerne le domaine des cartes à puce et plus particulièrement des cartes à puce constituant un porte monnaie électronique (e-purse) qui sont destinées à être préchargées ou rechargées par des valeurs fiduciaires qui sont ensuite débitées de la carte au fur et à mesure des utilisations.

De telles cartes à puce constituant porte monnaie électronique intègrent ou non d'autres fonctions, par exemple cartes bancaires classiques, cartes de retrait, etc.

La présente invention s'applique plus particulièrement à la gestion d'opération de paiement au moyen de bons d'achat (vouchers), en particulier dans des services de type restauration. Dans cette application, l'invention vise notamment à permettre l'utilisation de cartes porte monnaie électronique d'architecture classique.

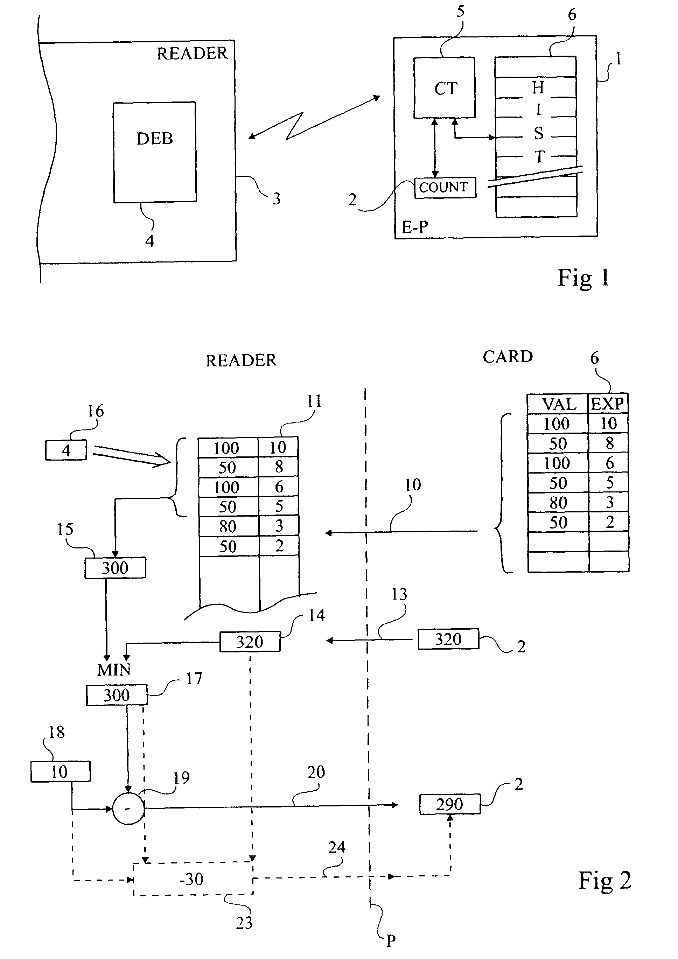

La figure 1 représente de façon très schématique et sous forme de blocs, un exemple classique de carte à puce 1 (E) constituant un porte monnaie électronique (e-purse) dont un compteur 2 (COUNT) totalisateur de valeur fiduciaire est débité par un lecteur 3 (READER) distant. En figure 1, l'opération de débit du compteur 2 a été symbolisée de façon très schématique côté lecteur 3 par un bloc 4 (DEB). En pratique, le lecteur 3 vérifie généralement l'authenticité de la carte 1, vérifie que le solde de valeur fiduciaire présent dans le compteur 2 est suffisant pour le débit souhaité, puis diminue le compte du compteur 2.

Côté carte 1, dans l'application au paiement électronique, les éléments sont essentiellement un circuit 5 (CT) de traitement et de commande des opérations, une mémoire 6 dédiée à stocker un historique (HIST) des opérations de paiement effectuées par la carte, et le compteur 2. L'historique des opérations côté carte est stocké dans la mémoire 6 à la manière d'une pile à décalage que ce soit pour les opérations de crédit, c'est-à-dire des incréments au solde du compteur 2 (rechargement de la carte) ou pour les opérations de débit (achats effectués au moyen de la carte). Le plus souvent, la mémoire 6 est alors divisée en deux zones respectivement dédiées aux historiques de rechargement et de dépense.

Les cartes de type porte monnaie électronique sont adaptées à être rechargées par des valeurs fiduciaires (généralement monétaires) puis à être débitées au fur et à mesure des achats chez les commerçants.

Toutefois, les systèmes actuels ne permettent pas des fonctionnements avec des bons d'achat qui ont pour caractéristique d'avoir une valeur fiduciaire indivisible et/ou d'avoir une date limite de validité. Par exemple, les bons d'achat utilisés pour des services de restauration ont une valeur prédéterminée et ne sont valables que pendant une certaine durée.

Il serait souhaitable de pouvoir disposer d'un système électronique de type carte à puce pour éviter des manipulations de bons d'achat papier comme c'est le cas aujourd'hui. Un problème est alors que, sauf à disposer d'une capacité de calcul importante, les cartes à puce ne permettent pas de gestion calendaire.

Or, pour des raisons de sécurité contre la fraude, il n'est pas souhaitable de supprimer les limites calendaires des bons d'achat ou analogues.

En outre, les bons d'achat comportent généralement un numéro de série (successif ou non) souvent par carnet.

Un autre problème particulièrement présent dans des cartes à puce simplifiées de type porte monnaie électronique est qu'un seul compteur totalisateur est disponible sur la carte et que l'organisation de la mémoire disponible est pré-établie à la manière d'une pile à décalage. En outre, les enregistrements ne sont pas effaçables de façon sélective, ce qui ne permet donc pas de supprimer des bons d'achat dont la date limite est dépassée.

Le brevet US 6,505,773 décrit un système d'émission et de remboursement de coupons électroniques authentifiés selon l'art antérieur.

La présente invention vise à proposer une nouvelle technique de mise à jour d'un compteur de carte à puce ou analogue pour permettre la gestion de valeurs fiduciaires avec date d'échéance et/ou de valeur indivisible.

La présente invention vise également à proposer une solution qui ne nécessite aucune modification structurelle des cartes de paiement électroniques classiques et, notamment, qui soit compatible avec l'utilisation d'une mémoire organisée sous la forme d'une pile à décalage.

L'invention vise également à proposer une solution particulièrement adaptée à une gestion électronique de bons d'achat et, en particulier, à permettre la gestion des numéros de série de tels bons d'achat.

Plus généralement, la présente invention vise à proposer une solution pour mettre à jour un compteur dans un élément électronique communiquant avec une base ou un lecteur (que ce soit par des moyens avec ou sans contact) sur commande de cette base, mais en tenant compte d'informations contenues dans l'élément lui-même.

Pour atteindre ces objets ainsi que d'autres, la présente invention prévoit un procédé de mise à jour d'un compteur d'un élément électronique dans lequel sont mémorisés des enregistrements contenant chacun au moins une valeur individuelle et au moins une donnée de tri, consistant à :
transférer dans une mémoire d'un lecteur, un compte initial du compteur et lesdits enregistrements ;
calculer côté lecteur un compte intermédiaire égal au minimum du compte initial et de la somme des valeurs individuelles des enregistrements dont la donnée de tri est comprise dans une plage connue du lecteur ; et
transférer, dans le compteur de l'élément électronique, un nombre fonction du compte intermédiaire.

Selon un mode de mise en oeuvre de la présente invention, ledit nombre est égal audit compte intermédiaire.

Selon un mode de mise en oeuvre de la présente invention, ledit nombre est une valeur d'incrément ou de décrément égale à la différence entre le compte intermédiaire et le compte initial.

Selon un mode de mise en oeuvre de la présente invention, le compteur de l'élément électronique est décrémenté ou incrémenté d'une valeur connue du lecteur.

Selon un mode de mise en oeuvre de la présente invention, ledit nombre est un compte final égal au compte intermédiaire incrémenté ou décrémenté d'une valeur connue du lecteur.

Selon un mode de mise en oeuvre de la présente invention, ledit nombre est une valeur d'incrément ou de décrément égale à la différence entre le compte intermédiaire et le compte initial, majorée ou minorée d'une valeur connue du lecteur.

Selon un mode de mise en oeuvre de la présente invention, la donnée de tri est une date.

Selon un mode de mise en oeuvre de la présente invention, ladite donnée de tri est un numéro affecté à chaque valeur.

Selon un mode de mise en oeuvre de la présente invention, une première donnée de tri est une date et une deuxième donnée de tri est un numéro affecté à chaque valeur.

Selon un mode de mise en oeuvre de la présente invention, ladite plage connue du lecteur a, pour borne maximum, la date courante.

Selon un mode de mise en oeuvre de la présente invention, un même enregistrement contient au moins une valeur individuelle, un nombre de valeurs et une donnée de tri.

Selon un mode de mise en oeuvre de la présente invention, ladite valeur connue du lecteur est un multiple entier de la valeur individuelle d'au moins un enregistrement.

Selon un mode de mise en oeuvre de la présente invention, lesdites valeurs individuelles sont des valeurs fiduciaires.

Selon un mode de mise en oeuvre de la présente invention, lesdits enregistrements sont chargés dans l'élément électronique en respectant la donnée de tri.

L'invention prévoit également une carte à puce ou analogue comprenant un compteur et une mémoire organisée en table d'enregistrements de type pile à décalage, chaque enregistrement de la table contenant au moins une valeur individuelle et au moins une donnée de tri.

Selon un mode de réalisation de la présente invention, la carte constitue l'élément électronique dont le compteur est mis à jour.

L'invention prévoit également un procédé de gestion électronique de bons d'achat portés par un élément électronique de type carte à puce ou analogue.

L'invention prévoit également un système de gestion électronique de bons d'achat portés par des éléments électroniques de type cartes à puce ou analogues, comprenant au moins un lecteur susceptible de communiquer avec un élément électronique, pour mettre à jour le compteur de cet élément.

Selon un mode de réalisation de la présente invention, le système comporte en outre au moins un serveur susceptible de communiquer avec plusieurs lecteurs.

Selon un mode de réalisation de la présente invention, le système comporte des moyens pour vérifier l'authenticité des bons d'achat traités par lesdits lecteurs.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 décrite précédemment représente, de façon très schématique et sous forme de blocs, un exemple de système de cartes à puce de type paiement électronique auquel s'applique plus particulièrement la présente invention ;
la figure 2 illustre un mode de mise en oeuvre du procédé de mise à jour de compteur selon la présente invention ;
la figure 3 représente, de façon très schématique et sous forme de blocs, les éléments d'un système de gestion électronique de bons d'achat selon un mode de mise en oeuvre préféré de la présente invention ; et
la figure 4 illustre un mode de mise en oeuvre de l'invention appliqué au système de la figure 3.

Les mêmes éléments ont été désignés par les mêmes références aux différentes figures. Pour des raisons de clarté, seuls les éléments et les étapes de procédé qui sont nécessaires à la compréhension de l'invention ont été représentés aux figures et seront décrits par la suite. En particulier, la traduction du procédé de l'invention en langage interprétable pour une mise en oeuvre logicielle ne fait pas l'objet de l'invention, celle-ci étant compatible avec toute adaptation logicielle classique. De plus, les détails constitutifs d'une carte à puce, d'un lecteur ou du serveur n'ont pas été exposés sauf pour ce qui concerne la présente invention, leur adaptation éventuelle étant à la portée de l'homme du métier.

La présente invention sera décrite par la suite en relation avec un exemple d'application à une carte à puce de type porte monnaie électronique communiquant avec un lecteur pour une application de gestion de bons d'achat ou analogues. Toutefois, l'invention s'applique plus généralement dès que l'on souhaite mettre à jour un compteur dans un premier élément électronique, au moyen d'un autre élément avec lequel ce premier élément communique avec ou sans contact, et que des problèmes similaires se posent.

Une caractéristique de la présente invention est de transférer, vers le lecteur de carte, non seulement le compte (valeur fiduciaire) du compteur de la carte, mais également le contenu de sa mémoire correspondant au rechargement, c'est-à-dire à l'incrémentation du compteur totalisateur par une ou plusieurs quantités correspondant aux valeurs (par exemple, indivisibles) des bons d'achat. Ainsi, l'invention prévoit de mémoriser, côté carte et dans une mémoire organisée en pile d'enregistrement à décalage, non seulement la valeur fiduciaire de chaque bon d'achat ou analogue mais également au moins une donnée de tri ou d'entête. Cette donnée de tri peut être un numéro incrémentiel du type numéro de série de bon d'achat dans un carnet ou être une donnée calendaire, c'est-à-dire la date d'expiration, exprimée en date complète ou en mois ou année.

Une autre caractéristique de la présente invention est de faire recalculer, par le lecteur de carte, la valeur fiduciaire disponible actualisée de la carte. Ainsi, dans le cas où le compteur de la carte tient compte de bons d'achat expirés, celui-ci se trouve diminué pour ne contenir que les bons d'achat valides.

Selon l'invention, lors d'un rechargement de la carte par acquisition de nouveaux bons d'achat, ceux-ci sont chargés dans la mémoire à décalage. A la manière des rechargements de valeurs fiduciaires dans des portes monnaies électroniques, la seule précaution est d'interdire un rechargement si la dernière valeur de la pile (la plus ancienne) n'est pas encore expirée.

Pour la mise en oeuvre de l'invention, les bons d'achat doivent être utilisés (dépensés) dans le même ordre que celui dans lequel ils ont été acquis (chargés) dans la table et, lors du rechargement, un bon d'achat ne peut être chargé dans la carte que s'il n'expire pas avant les bons d'achat déjà présents dans celle-ci.

La figure 2 illustre, de façon très schématique, un mode de mise en oeuvre du procédé de mise à jour de compteur selon la présente invention. Cette figure illustre en partie droite d'un pointillé p les opérations qui sont effectuées côté carte (CARD) et côté gauche du pointillé les opérations qui sont effectuées par le lecteur (READER) avec lequel la carte communique de façon classique avec ou sans contact. Bien entendu, avant la mise en oeuvre du procédé de l'invention, des étapes classiques d'authentification de la carte et d'établissement du protocole de communication sont mises en oeuvre.

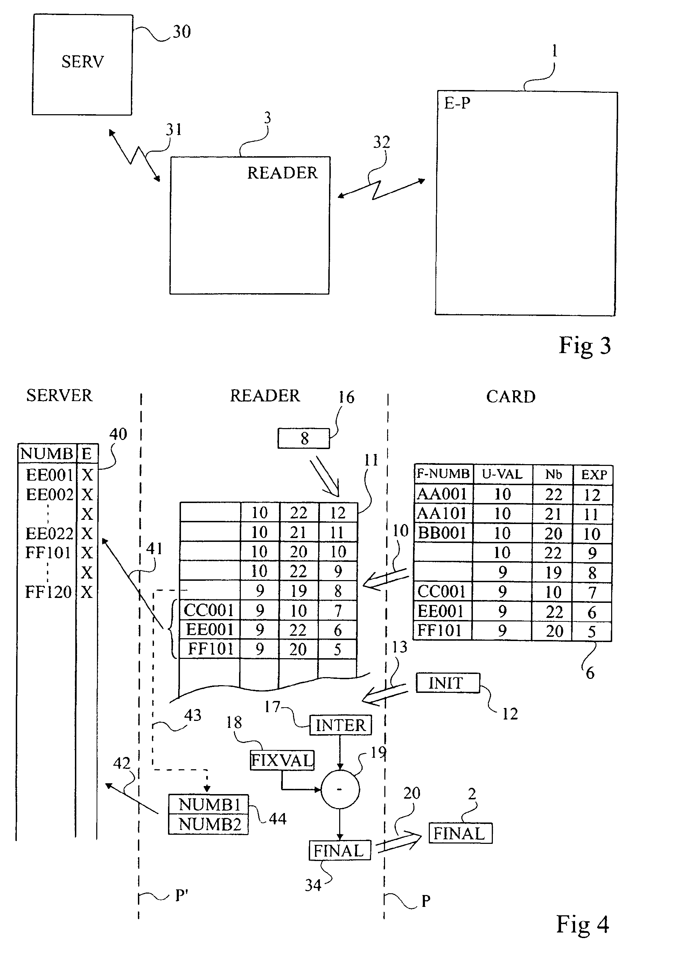

Dans cet exemple, on suppose que des bons d'achat sont chargés dans la mémoire 6 de la carte de façon individuelle et que seule la valeur fiduciaire VAL du bon d'achat et sa date d'expiration EXP est exploitée. On verra par la suite en relation avec la figure 4, un autre mode de mise en oeuvre dans lequel on tient compte du numéro de série du bon d'achat et dans lequel les bons d'achat sont rentrés dans la mémoire par carnets.

Dans le mode de mise en oeuvre de la figure 2, chaque enregistrement de la table 6 contient une valeur fiduciaire, respectivement 100, 50, 100, 50, 80 et 50 et sa date d'expiration, ici indiquée sous forme de mois respectivement 10, 8, 6, 5, 3 et 2. En pratique, la date d'expiration tiendra compte bien entendu de l'année mais cela ne change rien à l'exposé de l'invention.

Une fois les étapes d'authentification de la carte effectuées et le protocole de communication initialisé, le contenu de la table 6, c'est-à-dire les valeurs fiduciaires et les dates d'expiration respectives sont transférées vers le lecteur (flèche 10) pour être stockées temporairement dans une mémoire de celui-ci sous la forme, là encore, d'une table 11 dont les enregistrements respectifs comprennent la valeur fiduciaire et l'échéance de chacun des bons d'achat.

Le compte initial (bloc 2) du compteur de la carte est également transféré (flèche 13) vers le lecteur. Dans cet exemple, ce compte initial est supposé avoir une valeur de 320. La valeur contenue dans le compteur 2 est indépendante des valeurs respectives des enregistrements de la table 6 en ce sens que certains bons d'achat ont pu être déjà consommés sans qu'ils aient disparus de la table 6. Côté lecteur, la valeur initiale du compteur est stockée dans un registre (symbolisée par un bloc 14).

Selon l'invention, le lecteur recalcule, à partir des enregistrements de sa table 11, le total des valeurs fiduciaires respectives des bons d'achat non expirés et le stocke dans un registre ou analogue (bloc 15). En d'autres termes, à partir d'une date courante contenue dans un registre ou analogue (bloc 16), que l'on suppose ici comme étant le mois 4, le lecteur calcule le total de toutes les valeurs respectives des bons d'achat dont les dates d'expiration sont postérieures. Dans l'exemple de la figure 2, cela revient à éliminer les deux derniers bons d'achat de valeurs respectives 80 et 50 dont les dates d'expiration sont respectivement 3 et 2.

Il importe peu que ces bons d'achat aient été ou non consommés par l'utilisateur lors d'achats précédents. Dans une application à des bons d'achat à date d'expiration, ils ne sont plus valables.

Plus généralement, le lecteur calcule un total de valeurs dont la donnée de tri est comprise dans une plage connue du lecteur. Cette plage est ici une plage de dates mais il peut aussi s'agir d'une plage de numéros de série, etc.

Le lecteur calcule ensuite un compte intermédiaire correspondant à la plus petite valeur (MIN) entre le compte initial (valeur 320 dans le bloc 14) et la somme des valeurs individuelles des enregistrements valides qu'il vient de calculer (valeur 300, bloc 15). Dans l'exemple de la figure 2, le compte initial de 320 est supérieur à la somme des bons d'achat encore valides, cela signifie qu'une valeur 20 est perdue pour l'utilisateur. On suppose ici des bons d'achat fractionnables, c'est-à-dire dont les valeurs fiduciaires sont divisibles. Le compte intermédiaire est stocké dans un registre 17 ou analogue.

On suppose que l'utilisateur a souhaité faire une dépense de valeur 10 qui est stockée dans un registre temporaire (bloc 18) du lecteur. Cette valeur connue du lecteur est, par exemple, saisie par un commerçant que l'usager souhaite payer avec un bon d'achat. Après avoir vérifié que le solde contenu dans le registre 17 est supérieur à la valeur d'achat, le lecteur diminue ce compte intermédiaire (bloc 19, -) de l'achat effectué avant de transférer (flèche 20) le compte final vers la carte, dans laquelle il est stocké comme nouvelle valeur (ici 290) du compteur 2.

Selon une variante de réalisation, l'opération de décrément est effectuée par la carte. Dans ce cas (illustré par des pointillés en figure 2), le lecteur calcule une valeur de décrément (bloc 23, -30) correspondant à la différence entre le compte intermédiaire (300) et le compte initial (320), encore diminuée de la valeur d'achat (10). Cette valeur de décrément est alors transmise (flèche 24) à la carte pour décrémenter le compteur. On obtient bien entendu le même résultat que dans le premier mode de mise en oeuvre.

Selon une autre variante, le compte intermédiaire est transféré à la carte (sous forme de décrément ou en tant que tel) dès qu'il a été calculé. Dans le cas d'un achat, le solde final est transféré à la carte dans un deuxième temps sous forme de décrément ou en tant que tel. En l'absence d'achat, il peut s'agir d'une simple mise à jour du compteur de la carte après expiration de certains bons d'achat.

En fait, quel que soit le mode de mise en oeuvre ou la variante, un nombre qui est fonction (qui tient compte) du compte intermédiaire est transféré du lecteur vers la carte pour actualiser le compteur de la carte.

Le procédé de mise à jour qui a été décrit ci-dessus en relation avec une application à un achat est également valable, avec de légères modifications, pour mettre à jour la valeur fiduciaire du compteur de la carte en cas d'incrémentation par chargement de nouveaux bons d'achat. Dans ce cas, la valeur d'achat (bloc 18) est remplacée par une valeur d'incrément. Une façon simple est de prévoir un additionneur à la place du soustracteur 19 et de charger le registre 18 avec une valeur négative en cas d'achat et avec une valeur positive en cas de rechargement. Les variantes décrites en relation avec l'achat sont compatibles pour un rechargement (transfert du solde final, transfert de l'incrément, transfert du compte intermédiaire par incrément/décrément ou en tant que tel, etc.). Une étape supplémentaire dans le cas d'un rechargement consiste à transférer le ou les nouveaux bons d'achat (valeur, date d'expiration, etc.) dans la table 6 de la carte.

Un avantage de l'invention, qui ressort déjà de la description du mode de réalisation simplifié de la figure 2, est qu'elle permet de prendre en compte des dates d'expiration de valeurs fiduciaires sans que la carte ait besoin de traiter cette fonction calendaire.

Un autre avantage de l'invention est que sa mise en oeuvre est alors compatible avec les cartes simplifiées de type porte monnaie électronique. Il suffit d'utiliser leur mémoire de type pile à décalage pour stocker les enregistrements correspondant aux bons d'achat et à leurs dates d'expiration respectives.

On notera que ce qui a été décrit précédemment en relation avec des échéances calendaires peut s'appliquer à d'autres données de tri, par exemple, le numéro de série du bon d'achat.

La figure 3 représente, de façon très schématique et sous forme de blocs, des éléments d'un système de gestion de bons d'achat selon la présente invention dans lequel on souhaite tenir compte également des numéros de série des bons d'achat.

Un tel système comprend essentiellement un serveur 30 (SERV) communicant avec un ou plusieurs lecteurs (ou lecteur enregistreur) 3 de carte à puce 1 de type porte monnaie électronique. Les détails constitutifs du serveur, de la carte et du lecteur n'ont pas été illustrés, les constituants matériels étant en eux-mêmes classiques. Le lecteur et le serveur communiquent avec ou sans contact (flèche 31). Par exemple, le serveur est accessible par une liaison de type Internet à plusieurs lecteurs répartis chez des commerçants. Côté communication lecteur-carte celle-ci est également avec ou sans contact (flèche 32). Par ailleurs, le lecteur peut être distinct d'un enregistreur (pour recharger la carte) ou être combiné selon les applications.

La figure 4 illustre, par une vue à rapprocher de la figure 2, un mode de mise en oeuvre préféré de l'invention à la gestion électronique de bons d'achat identifiables par un numéro de série (NUMB) et possédant une date d'échéance ou d'expiration (EXP) et une valeur fiduciaire (U-VAL) indivisible. Par indivisible, on entend qu'un achat effectué par un utilisateur au moyen d'un tel bon, même s'il est d'un montant inférieur à la valeur fiduciaire du bon, l'oblige à dépenser l'intégralité de celui-ci.

Comme pour la figure 2, on a séparé par des pointillés ici p et p', les éléments de la carte CARD (partie droite), du serveur SERVER (partie gauche), et du côté lecteur READER (entre les pointillés p et p').

Côté carte, chaque enregistrement de la table 6 comporte quatre données : le premier numéro (F-NUMB) du carnet de bons d'achat, la valeur unitaire (U-VAL) de chaque bon d'achat du carnet ou de la série, le nombre Nb de bons d'achat dans le carnet ou la série, et la date d'expiration EXP de ces bons d'achat. Dans cet exemple, on a supposé que tous les bons d'achat ont jusqu'au mois d'août (8) une valeur unitaire de 9, et que tous les bons d'achat postérieurs ont une valeur unitaire de 10. Les numéros de série (AA001, AA101, BB001, CC001, EE001, FF101) ont été indiqués de façon arbitraire de même que le nombre de bons d'achat par carnet, ainsi que leurs valeurs unitaires et dates d'expiration.

Comme dans le premier mode de mise en oeuvre, les enregistrements de la table 6 sont transférés (flèche 10) vers le lecteur où ils sont stockés dans une mémoire (table 11). Cette table 11 a la même structure que la table 6 du lecteur. De même, le compte initial (bloc 12) INIT de la carte est transféré (flèche 13) vers le lecteur.

Toujours comme dans le premier mode de réalisation, le lecteur calcule un compte intermédiaire (bloc 17) INTER comme correspondant à la plus petite valeur entre le compte initial transféré de la carte et la somme des valeurs individuelles des enregistrements dont la date n'a pas expiré. On suppose ici que le mois courant (bloc 16) est le mois d'août (8). Par conséquent, le compte intermédiaire correspond à la somme des valeurs respectives des carnets de bons d'achat dont la date d'expiration est postérieure ou égale à 8. En pratique, le lecteur multiplie les valeurs unitaires par le nombre de bons d'achat par carnet et somme l'ensemble de ces produits. Dans l'exemple représenté en figure 4, cette somme des valeurs individuelles des enregistrements correspond à 1021.

S'il s'agit d'un débit, le lecteur décrémente la valeur intermédiaire d'une valeur fixe (FIXVAL, bloc 18) correspondant à la valeur de l'achat effectué, correspondant à un multiple entier des valeurs unitaires disponibles les plus anciennes (ici, 9). Le compte final (bloc 34, FINAL) est alors transféré (flèche 20) vers la carte pour mettre à jour le contenu du compteur 2.

Dans le mode de réalisation de la figure 4, les numéros de série des bons d'achat sont par ailleurs gérés par le serveur. En d'autres termes, le serveur contient une table 40 des numéros de série (NUMB) des différents bons d'achat émis et, en relation avec ces numéros de série, une donnée de pointage (E). Le lecteur transmet alors au serveur les numéros de série des bons d'achat expirés dont il ne tient pas compte dans le calcul du compte intermédiaire. Dans cet exemple, les numéros CC001, EE001, FF101, ainsi que les nombres, 10, 22 et 20 correspondants de ces bons d'achat. Dans le cas où le serveur n'a pas encore reçu l'information d'une consommation de ces bons d'achat, il leur affecte une donnée de pointage. En variante, le serveur ne tient compte que des bons d'achat non expirés et élimine de lui-même tous les numéros de série des bons d'achat expirés.

Une vérification des numéros de série sert également à authentifier des bons d'achat contenus dans la carte afin de détecter certaines fraudes. Une telle adaptation de l'invention est à la portée de l'homme du métier.

Selon une autre variante, également valable dans le premier mode de mise en oeuvre (figure 2), la différence entre le compte intermédiaire et le compte initial (donc la valeur des bons d'achat expirés) est transmise par le lecteur au serveur, avec ou sans les numéros de série.

De préférence, lors de la réalisation de l'achat par le débit du compte intermédiaire de la valeur contenue dans le registre 18, le lecteur affecte à cet achat un ou plusieurs bons d'achat de la table 11 et les mémorise pour communiquer les numéros correspondants (flèche 42) au serveur pour qu'il les considère comme pointés (utilisés). Ce fonctionnement est symbolisé en figure 4 par une flèche en pointillé 43 de la table 11 vers des registres temporaires 44 (NUMB1, NUMB2, etc.) et par une flèche 42 de transfert vers le serveur. La transaction entre le lecteur et la carte n'est en général pas simultanée avec la connexion entre le lecteur et le serveur. Les informations (bons d'achats utilisés) sont stockées dans le lecteur et transmises au serveur, par exemple, sur demande ou périodiquement (par exemple, tous les soirs).

Un avantage de l'invention est qu'elle permet une gestion électronique de bons d'achat (par exemple, de tickets de restauration) en tenant compte non seulement de leur date d'expiration mais également des numéros de série des différents bons d'achat.

Un autre avantage de l'invention est qu'elle est compatible avec une exploitation de ces bons d'achat soit par carnet (figure 4) soit de façon individuelle. Cette adaptation dépend en particulier de la taille de la table mémoire disponible dans la carte. Dans les cartes à puces simplifiées, cette mémoire est relativement restreinte et l'exploitation des bons d'achat par carnet présente alors l'avantage de permettre un stockage plus important.

On notera que l'invention s'applique, que la carte à puce soit une carte mono application c'est-à-dire, uniquement de porte monnaie électronique ou qu'elle comprenne également d'autres fonctions (cartes de paiement, de débit, etc.).

Bien entendu, la présente invention est susceptible de diverses variantes et modifications qui apparaîtront à l'homme de l'art. En particulier, la combinaison avec des systèmes d'authentification et de vérification des bons d'achat est à la portée de l'homme du métier en utilisant des processus classiques.

De plus, bien que l'invention ait été décrite plus particulièrement en relation avec une application à des bons d'achat, elle s'applique plus généralement à la mise à jour d'un compteur dans un élément électronique de type carte à puce ou analogue et dans lequel on souhaite tenir compte d'une donnée de tri, alors que cet élément électronique ne comporte pas de moyen de calcul pour en tenir compte.

En outre, la gestion des valeurs fiduciaires lues dans la carte en fonction de leur destination (par exemple, la gestion des valeurs d'achat par transfert vers un compte du commerçant et la gestion des valeurs expirées une fois transférées au gestionnaire des bons d'achat, généralement le serveur) est à la portée de l'homme du métier en utilisant des systèmes de gestion classiques.

## Revendications

1. Procédé de mise à jour d'un compteur (2) d'un élément électronique (1) dans lequel sont mémorisés des enregistrements (6) contenant chacun au moins une valeur individuelle (VAL, U-VAL) et au moins une donnée de tri (EXP, F-NUMB), **caractérisé en ce qu'**il consiste à :
transférer dans une mémoire (11) d'un lecteur (3), un compte initial (INIT) du compteur et lesdits enregistrements ;
calculer côté lecteur un compte intermédiaire (INTER) égal au minimum du compte initial et de la somme des valeurs individuelles des enregistrements dont la donnée de tri est comprise dans une plage connue du lecteur ; et
transférer, dans le compteur de l'élément électronique, un nombre fonction du compte intermédiaire.

2. Procédé selon la revendication 1, dans lequel ledit nombre est égal audit compte intermédiaire (INTER).

3. Procédé selon la revendication 1, dans lequel ledit nombre est une valeur d'incrément ou de décrément égale à la différence entre le compte intermédiaire (INTER) et le compte initial (INIT).

4. Procédé selon la revendication 2 ou 3, consistant en outre à décrémenter ou incrémenter le compteur (2) de l'élément électronique (1) d'une valeur (FIXVAL) connue du lecteur (3).

5. Procédé selon la revendication 1, dans lequel ledit nombre est un compte final (FINAL) égal au compte intermédiaire (INTER) incrémenté ou décrémenté d'une valeur (FIXVAL) connue du lecteur.

6. Procédé selon la revendication 1, dans lequel ledit nombre est une valeur d'incrément ou de décrément égale à la différence entre le compte intermédiaire (INTER) et le compte initial (INIT), majorée ou minorée d'une valeur (FIXVAL) connue du lecteur.

7. Procédé selon l'une quelconque des revendications 1 à 6, dans lequel la donnée de tri est une date (EXP).

8. Procédé selon l'une quelconque des revendications 1 à 6, dans lequel ladite donnée de tri est un numéro affecté à chaque valeur.

9. Procédé selon l'une quelconque des revendications 1 à 8, dans lequel une première donnée de tri est une date (EXP) et une deuxième donnée de tri est un numéro (F-NUMB) affecté à chaque valeur.

10. Procédé selon l'une quelconque des revendications 1 à 7, dans lequel ladite plage connue du lecteur (3) a, pour borne maximum, la date courante (16).

11. Procédé selon l'une quelconque des revendications 1 à 10, dans lequel un même enregistrement contient au moins une valeur individuelle (U-VAL), un nombre de valeurs (Nb) et une donnée de tri (EXP, F-NUMB).

12. Procédé selon l'une quelconque des revendications 4 à 6, dans lequel ladite valeur connue du lecteur (FIXVAL) est un multiple entier de la valeur individuelle (VAL, U-VAL) d'au moins un enregistrement.

13. Procédé selon l'une quelconque des revendications 1 à 12, dans lequel lesdites valeurs individuelles (VAL, U-VAL) sont des valeurs fiduciaires.

14. Procédé selon l'une quelconque des revendications 1 à 13, dans lequel lesdits enregistrements sont chargés dans l'élément électronique (1) en respectant la donnée de tri (EXP, F-NUMB).

15. Procédé selon l'une quelconque des revendications 1 à 14 dans lequel lesdits enregistrements représentent des bons d'achat.

16. Carte à puce (1) ou analogue comprenant un compteur (2) et une mémoire (6) organisée en table d'enregistrements de type pile à décalage, **caractérisée en ce que** chaque enregistrement de la table contient au moins une valeur individuelle (VAL, U-VAL) et au moins une donnée de tri (EXP, F-NUMB), pour une mise en oeuvre du procédé selon l'une quelconque des revendications 1 à 14.

17. Système de gestion électronique de bons d'achat portés par des éléments électroniques (1) de type cartes à puce ou analogues, comprenant au moins un lecteur (3) susceptible de communiquer avec un élément électronique, comportant des moyens pour mettre en oeuvre le procédé selon l'une quelconque des revendications 1 à 14.

18. Système selon la revendication 17, comprenant en outre un serveur (30) susceptible de communiquer avec plusieurs lecteurs (3).

19. Système selon la revendication 18, comportant des moyens pour vérifier l'authenticité des bons d'achat traités par lesdits lecteurs (3).

## Claims

1. A method for updating a counter (2) of an electronic component (1) in which are memorized recordings (6), each containing at least one individual value (VAL, U-VAL) and at least one sorting value (EXP, F-NUMB), **characterized in that** it consists in:
transferring into a memory (11) of a reader (3) an initial count (INIT) of the counter and said recordings;
calculating on the reader side an intermediary count (INTER) equal to the minimum of the initial count and of the sum of the individual values of the recordings, the sorting value of which is comprised within a range known by the reader; and
transferring into the counter of the electronic component a number which is a function of the intermediary count.

2. The method of claim 1, wherein said number is equal to said intermediary count (INTER).

3. The method of claim 1, wherein said number is an increment or decrement value equal to the difference between the intermediary count (INTER) and the initial count (INIT).

4. The method of claim 2 or 3, further consisting of decrementing or incrementing the counter (2) of the electronic component (1) by a value (FIXVAL) known by the reader (3).

5. The method of claim 1, wherein said number is a final count (FINAL) equal to the intermediary count (INTER) incremented or decremented by a value (FIXVAL) known by the reader.

6. The method of claim 1, wherein said number is an increment or decrement value equal to the difference between the intermediary count (INTER) and the initial count (INIT), plus or minus a value (FIXVAL) known by the reader.

7. The method of any of claims 1 to 6, wherein the sorting value is a date (EXP).

8. The method of any of claims 1 to 6, wherein said sorting value is a number assigned to each value.

9. The method of any of claims 1 to 8, wherein a first sorting value is a date (EXP) and a second sorting value is a number (F-NUMB) assigned to each value.

10. The method of any of claims 1 to 7, wherein said range known by the reader (3) has, as an upper limit, the current date (16).

11. The method of any of claims 1 to 10, wherein a same recording contains at least one individual value (U-VAL), a number of values (Nb), and a sorting value (EXP, F-NUMB).

12. The method of any of claims 4 to 6, wherein said value known by the reader (FIXVAL) is an integral multiple of the individual value (VAL, U-VAL) of at least one recording.

13. The method of any of claims 1 to 12, wherein said individual values (VAL, U-VAL) are fiduciary values.

14. The method of any of claims 1 to 13, wherein said recordings are loaded into the electronic component (1) in accordance with the sorting value (EXP, F-NUMB).

15. The method of any of claims 1 to 14 wherein said recordings are vouchers.

16. An integrated circuit card (1) or the like comprising a counter (2) and a memory (6) organized as a recording table of stack type, wherein each recording in the table contains at least one individual value (VAL, U-VAL) and at least one sorting value (EXP, F-NUMB), for an implementation of the method of any of claims 1 to 14.

17. A system of electronic management of vouchers supported by electronic components (1) of integrated circuit card type or the like, comprising at least one reader (3) capable of communicating with an electronic component, to implement the method of any of claims 1 to 14.

18. The system of claim 17, further comprising a server (30) capable of communicating with several readers (3).

19. The system of claim 18, comprising means for checking the authenticity of the vouchers processed by said readers (3).

## Patentansprüche

1. Verfahren zum Aktualisieren eines Zählers (2), eines elektronischen Bauteils (1), in dem sich gespeicherte Aufzeichnungen (6) befinden, die jeweils wenigstens einen individuellen Wert (VAL, U-VAL) und wenigstens einen Sortierwert (EXP, F-NUMB) aufweist, **dadurch gekennzeichnet, dass** das Verfahren die folgenden Schritte aufweist:
Übertragen in einen Speicher (11) eines Lesers (3) eines Anfangszählstandes (INIT) des Zählers und der Aufzeichnungen;
Berechnen auf der Leserseite eines Zwischenzählstands (INTER) gleich dem Minimum des Anfangszählstands und der Summe der individuellen Werte der Aufzeichnungen, wobei deren Sortierwert innerhalb eines durch den Leser bekannten Bereichs liegt; und
Übertragen in den Zähler des elektronischen Bauteils einer Zahl, die eine Funktion des Zwischenzählstandes ist.

2. Verfahren nach Anspruch 1, wobei die Zahl gleich dem Zwischenzählstand (INTER) ist.

3. Verfahren nach Anspruch 1, wobei die Zahl ein Erhöhungs- oder Erniedrigungswert ist, und zwar gleich der Differenz zwischen dem Zwischenzählstand (INTER) und dem Anfangszählstand (INIT).

4. Verfahren nach Anspruch 2 oder 3, das ferner aus dem Verringern oder Erhöhen des Zählers (2) des elektronischen Bauteils (1) um einen Wert (FIXVAL) aufweist, der vom Leser (3) bekannt ist.

5. Verfahren nach Anspruch 1, wobei die Zahl ein Endzählerstand (FINAL) ist, der gleich dem Zwischenzählerstand (INTER) der durch einen Wert (FIXVAL) erhöht oder verringert ist, wobei dieser Wert durch den Leser bekannt ist.

6. Verfahren nach Anspruch 1, wobei die Zahl ein Erhöhungs- oder ein Verringerungswert ist gleich der Differenz zwischen dem Zwischenzählerstand (INTER) und dem Anfangszählerstand (INIT) plus oder minus eines Werts (FIXVAL), der vom Leser bekannt ist.

7. Verfahren nach einem der Ansprüche 1 bis 6, wobei der Sortierwert ein Datum (EXP) ist.

8. Verfahren nach einem der Ansprüche 1 bis 6, wobei der Sortierwert eine Zahl ist, die jedem Wert zugewiesen ist.

9. Verfahren nach einem der Ansprüche 1 bis 8, wobei der erste Sortierwert ein Datum (EXP) und zweiter Sortierwert eine Zahl ,(F-NUMB) ist, die jedem Wert zugewiesen ist.

10. Verfahren nach einem der Ansprüche 1 bis 7, wobei der Bereich der vom Leser (3) bekannt ist eine obere Grenze besitzt, die das derzeitige Datum (16) darstellt.

11. Verfahren nach einem der Ansprüche 1 bis 10, wobei dieselbe Aufzeichnung wenigstens einen Individual-Wert (U_VAL) aufweist, eine Anzahl von Werten (Nb) und eine Sortierwert (EXP, F-NUMB).

12. Verfahren nach einem der Ansprüche 4 bis 6, wobei der vom Leser bekannte Wert (FIXVAL) ein ganzzahliges Mehrfaches des Individualwerts (VAL, U-VAL) von wenigstens einer Aufzeichnung ist.

13. Verfahren nach einem der Ansprüche 11 bis 12, wobei die Individualwerte (VAL, U-VAL) Verwaltungs- oder Treuhänderwerte sind.

14. Verfahren nach einem der Ansprüche 1 bis 13, wobei die Aufzeichnungen in das elektronische Bauteil (1) gemäß dem Sortierwert (EXP, F-NUMB) geladen werden.

15. Verfahren nach einem der Ansprüche 1 bis 14, wobei die Aufzeichnungen Gutscheine sind.

16. Integrierte Schaltungskarte (1) oder Ähnliches, die bzw. das Folgendes aufweist: einen Zähler (2) und einen Speicher (6), die als eine Aufzeichnungstabelle des Stapeltyps organisiert sind, wobei jede Aufzeichnung in der Tabelle wenigstens einen Individualwert (VAL, U-VAL) und wenigstens einen Sortierwert (EXP, F-NUMB) aufweist für eine Implementierung des Verfahrens nach einem der Ansprüche 1 bis 14.

17. System zum elektronischen Management von Gutscheinen, die durch elektronische Bauteile (1) eines integrierten Schaltungskartentyps oder ähnlichem unterstützt werden, wobei das System Folgendes aufweist: Wenigstens einen Leser (3), der in der Lage ist, mit einem elektronischen Bauteil zu kommunizieren, um das Verfahren nach einem der Ansprüche 1 bis 14 zu implementieren.

18. System nach Anspruch 17, das ferner einen Server (30) aufweist, der in der Lage ist, mit mehreren Lesern (3) zu kommunizieren.

19. System nach Anspruch 18, das Mittel aufweist zum Überprüfen der Authentizität der Gutscheine, die durch die Leser (3) verarbeitet werden.
